# EUROPEAN PATENT SPECIFICATION

(11) **EP 2 257 003 B1**
(45) Date of publication and mention of the grant of the patent: **12.09.2012**
(21) Application number: 09305497.1
(22) Date of filing: 29.05.2009
(51) Int. Cl.: H04L 12/56

(54) **A data packet processing device and method generating measurable resource usage**
Datenpaketverarbeitungsvorrichtung und Verfahren, das eine messbare Ressourcennutzung erzeugt
Dispositif de traitement de paquets de données et procédé de génération d'utilisation de ressource mesurable

(43) Date of publication of application: 01.12.2010
(73) Proprietor: Alcatel Lucent, 75007 Paris (FR)
(72) Inventor: De Schepper, Koen, 2650, Edegem (BE); Van Leekwijck, Werner, 2610, Wilrijk (BE)
(74) Representative: ALU Antw Patent Attorneys

(56) References cited:
- US-A1- 2002 097 726
- US-B1- 6 977 896
- PHILIP EARDLEY (EDITOR) NOTIFICATION WORKING GROUP BT: "Pre-Congestion Notification (PCN) Architecture; draft-ietf-pcn-architecture-10.txt" PRE-CONGESTION NOTIFICATION (PCN) ARCHITECTURE; DRAFT-IETF-PCN-ARCHITECTURE-10.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, vol. pcn, no. 10, 16 March 2009 (2009-03-16), XP015061210

## Description

The present invention relates to a data packet processing device according to the preamble of claim 1 and a data packet processing method according to the preamble of claim 10, and generally to data packet processing in networks implementing Quality of Service (QoS). The invention in particular deals with the problem of guaranteeing resource reservation to QoS data packet flows, even in specific situations where these flows are not using their fully reserved bandwidth resources.

US 6,977,896 discloses a dummy generating unit that generates and transmits dummy data packets corresponding to the difference between the actual traffic and the Quality of Service guaranteed target data.

US 2002/097726 discloses methods for maintaining a small bounded aggregate state within network routers pertaining to selective architectural families. Paragraph 169 mentions that unused bandwidth of a real-time is best utilized for best-effort traffic.

In data packet networks implementing Quality of Service (QoS), data packets that are marked with a higher Quality of Service marking are treated with an appropriate priority mechanism.

When a new flow is coming up, an admission control function will decide to admit or reject the new flow. Such admission control function may be based on fixed reservations in the network and assumed statistical averages. Alternatively, the admission control for new flows may be measurement-based in which case the actual measured traffic in the network is taken into account to admit or reject a new flow. When there is sufficient bandwidth available based on the measured bandwidth usage, the admission control function will allow the new flow. A consequence thereof is that for a QoS flow not using its fully reserved bandwidth, the reserved bandwidth is no longer guaranteed. Whereas such measurement-based admission control can have statistical advantages in networks with many data packet flows with randomly distributed interruption in time, it is undesired in specific situations where these statistical assumptions are not valid and interruptions of several data packet flows are correlated in time.

In particular situations, several QoS flows may indeed simultaneously reduce their bandwidth usage as a result of which the statistical assumptions underlying measurement-based admission control are no longer valid. An example thereof is the situation where multiple Video-on-Demand or VoD flows that are unicasted to different destinations are interrupted for a broadcasted newsflash. Such newsflash is broadcasted over a multicast tree to the different destinations as a result of which the resource usage in the network, in particular in nodes or hops serving multiple destinations, reduces significantly in comparison with the situation where VoD flows are unicasted. Another example is an access network, e.g. a Digital Subscriber Line or DSL network, or more generally links through which typically a limited amount of flows are passing. On such links, the statistical assumptions are not valid because of the small number of flows conveyed. Yet another example is an event such as a thunderstruck, accident, hot news item, terrorist attack, etc. that makes large numbers of clients decide to simultaneously pause the services delivered to them. Each of these situations causes a big discrepancy between the measured resource usage and the reserved resources because large numbers of flows simultaneously reduce their resource usage. When measurement-based admission control is applied, new flows will be allowed in such situation as a result of which congestion may occur when the flows whose bandwidth usage was decreased, re-claim their reserved bandwidth.

The above problem may not only appear where measurement based admission control is applied, but also where pre-congestion or early congestion notification is implemented such as in a network segment with PCN or Pre-Congestion Notification architecture as defined in the IETF draft entitled "Pre-Congestion Notification (PCN) Architecture" from the editor Philip Eardley, published on April 7, 2009. In such PCN domain, pre-congestion states are measured between edges of the network. For each ingress-egress pair, the network determines if congestion is imminent. If the resources used on a particular link exceed a predefined threshold, packets on that link will be marked with a "pre-congested" marking. By looking at the markings, the egress nodes can then determine if certain flows have crossed a nearly congested link. This information is shared with other network elements and may be taken into account to allow or deny new flows.

It is an objective of the present invention to disclose a data packet processing device and method that overcomes the above identified shortcomings of existing systems. In particular, it is an objective to disclose a data packet processing device and method that enable to guarantee resource reservations to QoS data packet flows, even if measured resource usage is used as a basis for admitting new flows or as a basis for pre-congestion control in the data packet network.

The method of the invention is distinguished by the features of the characterizing portion of claim 1. The data packet processing device comprises:
- means for detecting resource usage reduction by a first data packet flow along a path from a first source to a first destination, the first data packet flow having a first Quality of Service marking; and
- means for generating measurable resource usage along at least part of the path of the first data packet flow.

The means for generating measurable resource usage comprise:
- means for upgrading a second Quality of Service marking of data packets in one or more data packet flows different from the first data packet flow to the first Quality of Service marking.

Indeed, an implementation of the mechanism according to the invention consists in upgrading lower quality traffic, e.g. data packets of best effort flows, with a marking matching the Quality of Service marking of the reserved flow whose resource usage drops. The upgrading may be applied packet per packet to avoid that one best effort flow would be prioritized over others.

Thus, the data packet processing device according to the invention generates extra measurable resource usage along the path of a flow whose resource usage suddenly drops. This extra measurable load can be introduced by or with the collaboration of the sender or source of the data packet flow, a policy enforcement function in the network, or routing nodes in the network. The mechanism according to the invention can work end-to-end between source and destination nodes, edge-to-edge between ingress and egress nodes, link-to-link between sender and receiver, or domain-to-domain. As a result of the mechanism according to the invention, further nodes along the path of the flow will measure the extra resource usage and resource reservations of the QoS data flow will remain guaranteed, entirely or partially.

The mechanism according to the invention enhances the usefulness of measurement based admission control and pre-congestion control, and broadens the applicability of these techniques to networks or links that do not necessarily convey large amounts of flows that behave statistically correct, such as last mile access networks.

Optionally, as defined by claim 2, the means for generating measurable resource usage may comprise:
- means for inserting or increasing a resource usage value in one or more data packets of the first data packet flow, the resource usage value being inspected and used by hops along the path for measurement of resource usage by the first data packet flow.

Thus, one possible implementation of the current invention consists in marking the packet size or marking a weight factor or increment value on existing data packets of the flow whose resource usage suddenly drops. The packet size value, weight factor or increment value will increase the measured resource usage for the flow without causing congestion. The packet size value may for instance indicate the amount of bytes to be measured by nodes along the path that receive the packet, even if the actual length of the packet does not correspond to that packet size. The weight factor may correspond to a multiplication factor to be applied by resource usage measuring nodes along the path that count packets. Such nodes will for instance count 3 packets for the flow each time a single packet of the flow is received. The increment value may represent an extra amount of bytes to be counted by resource usage measuring nodes along the path.

Optionally, as defined by claim 3, the means for generating measurable resource usage may comprise:
- means for generating and inserting in the first data packet flow empty data packets marked with the first Quality of Service marking and with a resource usage value, the resource usage value being inspected and used by hops along the path for measurement of resource usage by the first data packet flow.

Hence, instead of marking existing data packets with a packet size value, weight factor or increment value, a second implementation may consist in inserting in the flow empty data packets with a resource usage value, e.g. a multiplication factor indicating the number of packets it represents. This implementation may for instance be used in conjunction with a timeout mechanism. In a situation where no data packets are sent for a defined period of time, i.e. the timeout value, an empty data packet will be sent which will be counted or measured as a big data packet or as a plurality of data packets along the path.

Optionally, as defined by claim 4, the means for generating measurable resource usage may comprise:
- means for generating and inserting in the first data packet flow dummy data packets marked with the first Quality of Service marking.

Possibly less optimal but in certain conditions useful, a fourth implementation of the mechanism according to the invention may consist in introducing dummy traffic that is marked with the same Quality of Service marking as the flow whose resource usage suddenly drops. The dummy traffic can use wrong TCP sequence numbers, can represent duplicated packets, can contain wrong checksum values, etc. in order to enable the receiver or egress node to recognize and discard this extra traffic.

Optionally, as defined by claim 5, the means for generating measurable resource usage may comprise:
- means for tagging data packets of one or more data packet flows having a destination different from the first destination with a transferable Quality of Service token corresponding to the first Quality of Service marking, the Quality of Service token being transferable in a hop along the path where the data packets no longer follow the path of the first data packet flow.

Thus, in a fifth possible implementation of the mechanism according to the invention, also traffic for other destinations can be used temporarily to generate extra measurable resource usage. In this implementation, existing packets that carry their own destinations are tagged with tokens that can be transferred to other packets in the routers. These packets are marked with the Quality of Service marking of the flow whose resource usage had dropped as long as they follow the path of this follow. As soon as the packet is rerouted to its destination and no longer follows the path of the target flow, the token must be transferred to another packet that is routed to the next hop along the path of the target flow.

Optionally, as defined by claim 6, the means for generating measurable resource usage may comprise:
- means for encapsulating data packets of one or more data packet flows having a destination different from the first destination in a tunnel towards the first destination, the data packets being extractable from the tunnel in a hop along the path where the data packets no longer follow the path of the first data packet flow.

This way, a sixth implementation of the current invention also allows using traffic to other destinations to generate additional measurable resource usage for a QoS flow whose bandwidth usage has decreased. The packets from other flows are encapsulated in a tunnel towards the destination of the target flow. The tunnel is inspected in each hop to verify if the packets are still to be routed in the tunnel direction. When this is not the case, the packet will be extracted from the tunnel and another packet will be tunnelled.

Further optionally, as defined by claim 7, the data packet processing device according to the invention may comprise:
- means for configuring an amount of the measurable resource usage generated.

Indeed, the amount of additional generated measurable resource usage may be configurable. A higher amount will provide better guarantees for resource reservation for the target flow, whereas a lower amount allows more statistical multiplexing gains. In case the final measurable amount is configured to equal the peak bandwidth, then the maximum needed resources are guaranteed for the flow. In case the insertion of additional measurable bandwidth usage is zero, the system according to the invention will behave like the current prior art systems.

As is indicated by claims 8 and 9, the data packet processing device according to the current invention may optionally be integrated in a measurement based admission controller, or in a congestion controller.

Alternatively, the data packet processing device according to the present invention may be a separate device that interfaces with a resource admission controller or congestion controller through a standard or proprietary protocol. The data packet processing device according to the present invention obviously also may be integrated in a client or server.

In addition to a data packet processing device introducing measurable resource usage along the path of a flow, a corresponding data packet receiving device may be provided, comprising means for measuring resource usage along a path from a first source to a first destination, wherein the means for measuring resource usage comprise one or more of the following:
- means for inspecting and using a resource usage value for determining resource usage, and means for decreasing or removing the resource usage value;
- means for inspecting and using a resource usage value in an empty data packet for determining resource usage, and means for removing the empty data packet;
- means for degrading a Quality of Service marking of data packets;
- means for removing dummy data packets marked with a first Quality of Service marking;
- means for transferring and/or removing a Quality of Service token corresponding to a first Quality of Service marking from a data packet having a second destination different from the first destination, in a hop where the data packet no longer follows the path; and
- means for extracting from a tunnel towards the first destination a data packet having a second destination different from the first destination, in a hop where the data packet no longer follows the path.

In the implementation of the current invention that consists in marking the packet size, weight factor or increment value on existing data packets of the flow, measuring nodes should take the marked or indicated extra load into account when measuring the resource usage, determining near-congestion, and/or performing congestion marking. The admission or congestion controller in such case must take the marked or indicated load into account and the egress node may remove or decrease the marking to its original value.

In the implementation of the current invention that consists in inserting empty data packets with a resource usage value, measuring nodes should take the resource usage value into account when measuring the resource usage, determining near-congestion, and/or performing congestion marking. The admission or congestion controller in such case must take the resource usage value into account and the egress node may remove the empty data packets.

In the implementation of the current invention where the Quality of Service marking of low quality traffic is upgraded, measuring nodes can apply standard behaviour. Egress nodes can degrade the Quality of Service marking of the data packets again to its original, lower Quality of Service marking.

In the implementation where dummy traffic is inserted, measuring nodes can apply standard behaviour. Egress nodes can recognize and remove the dummy traffic from the flow.

In the implementation where existing packets travelling towards different destinations are temporarily tagged with a token, an interior node where the data packet no longer follows the path of the target flow has to remove and transfer the Quality of Service token to another data packet that follows the path of the target flow at least to the next hop.

In the implementation where existing packets travelling to the same or different destinations are tunnelled, an interior node where the data packet no longer follows the tunnel has to extract that data packet from the tunnel and insert another data packet that follows the tunnel at least to the next hop.

In addition to a data packet processing device introducing measurable resource usage along the path of a flow, the current invention also applies to a corresponding data packet processing method distinguished by the features of the characterizing portion of claim 10

### Brief Description of the Drawings

Fig. 1 illustrates a Pre-Congestion Notification network or PCN domain;

Fig. 2 illustrates in more detail a relevant section of the PCN domain of Fig. 1;

Fig. 3 illustrates the measured bandwidth usage over time in the PCN domain of Fig. 1 when the present invention would be deactivated therein; and

Fig. 4 illustrates the measured bandwidth usage over time in the PCN domain of Fig. 1 with an embodiment with an embodiment of the present invention activated therein.

### Detailed Description of Embodiment(s)

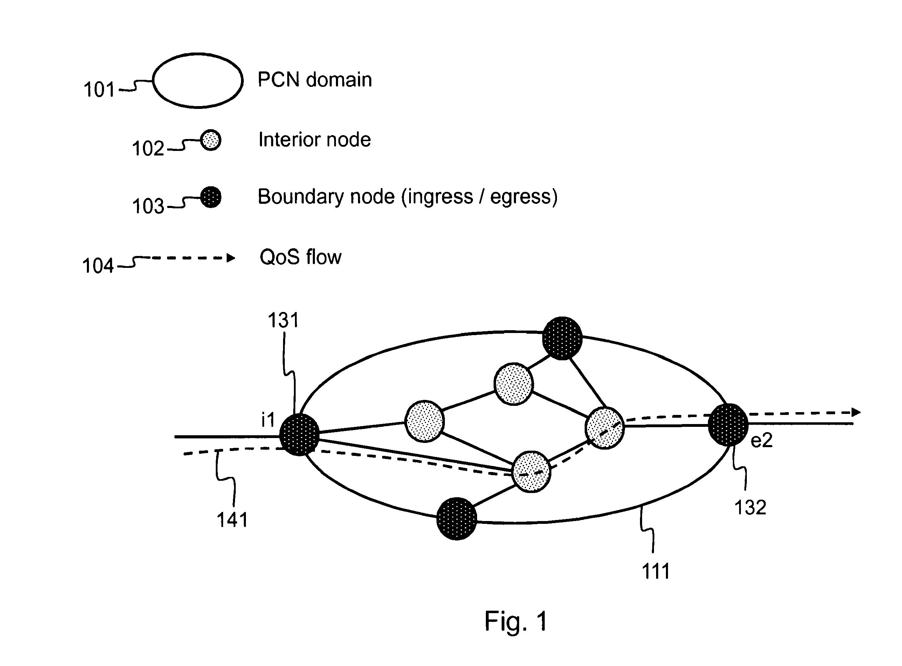

Fig. 1 shows a telecom network segment with PCN or Pre-Congestion Notification architecture as defined in the IETF draft entitled "Pre-Congestion Notification (PCN) Architecture" from the editor Philip Eardley, published on April 7, 2009. In such PCN domain 101, pre-congestion states are measured between edges of the network, i.e. for each pair of boundary or ingress-egress nodes 103, the network determines if congestion is imminent. The basic mechanism consists of defining a resource usage threshold on each link in the network, and if for a particular link the actual resources used exceed the threshold, packets on that link will be marked with a "pre-congested" marking. By looking at the markings, the egress nodes can then determine if certain flows have crossed a nearly congested link. This information is shared with other network elements, e.g. other boundary nodes 103 or interior nodes 102. When a new flow arrives, the decision to allow or deny the flow is based on the state of the ingress-egress combination that this flow would use.

Fig. 1 in particular shows a first Quality of Service data packet flow or QoS flow 141 whose path, denoted by the dotted arrow in Fig. 1, will cross the PCN domain 111 from ingress node i1 or 131 to egress node e2 or 132 via a number of interior nodes.

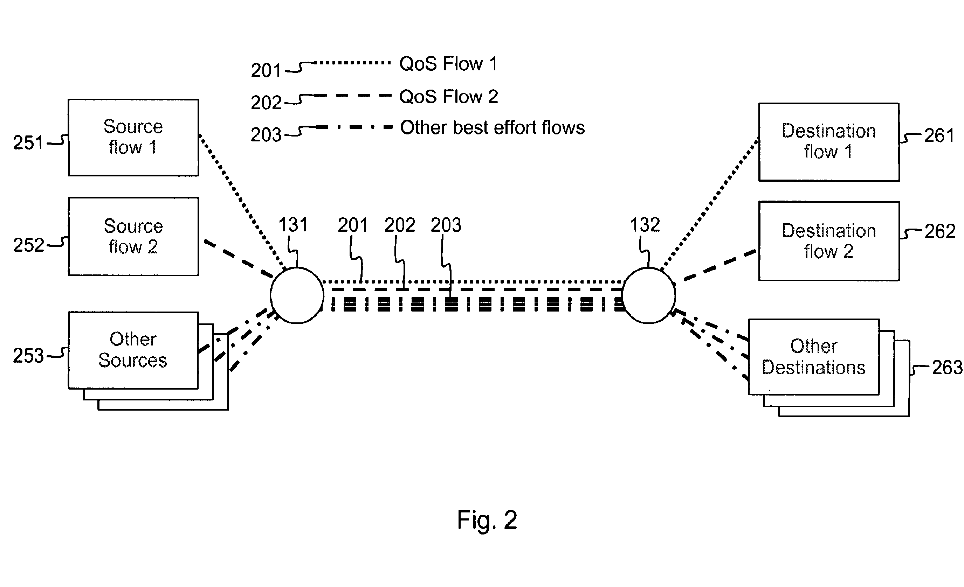

This first QoS flow from the first source node 251 to the first destination node 261 is also shown in Fig. 2, and is denoted 201 there. Fig. 2 further shows a second QoS flow 202 from a second source node 252 to a second destination node 262, whose path also crosses PCN domain 111 from ingress node 131 to egress node 132. Fig. 2 further shows a number of best effort data packet flows 203 between additional source nodes 253 and additional destination nodes 263, the best effort flows 203 also crossing the PCN domain 111 from ingress node 131 to egress node 132. It is assumed that the first QoS flow 201, the second QoS flow 202 and the shown best effort flows 203 follow the same path along the same interior nodes within the PCN domain 111.

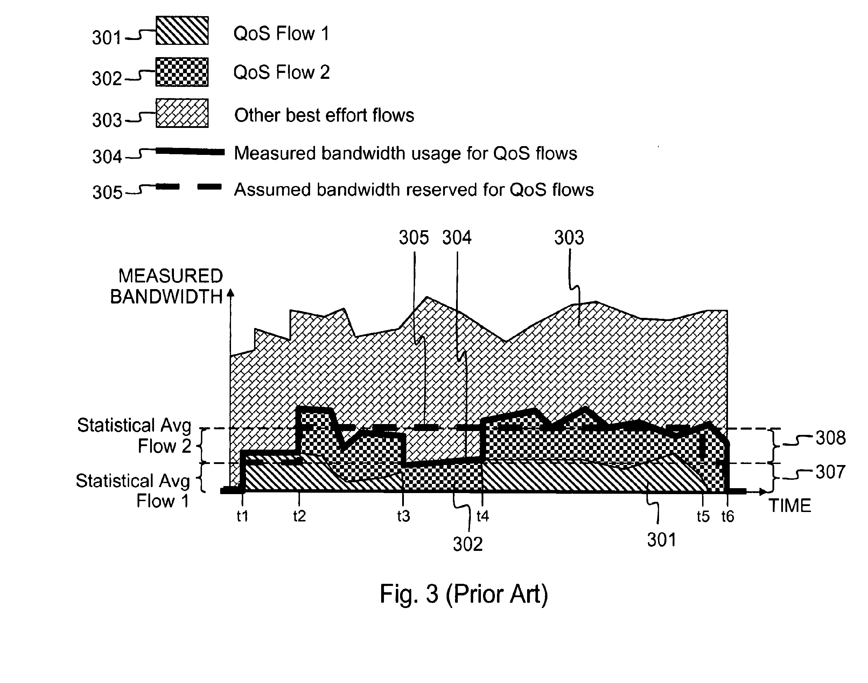

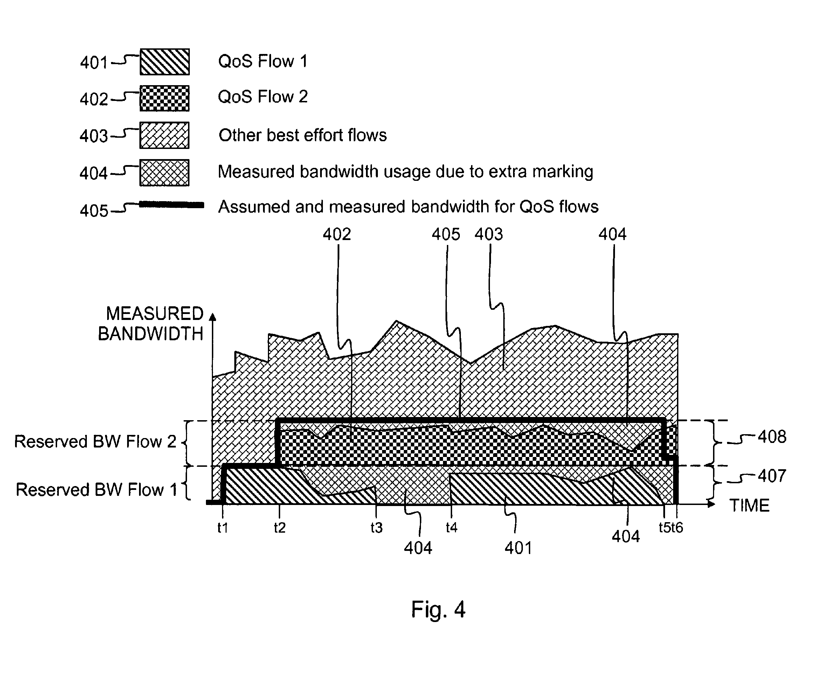

In case where one or more flows that have been admitted between ingress node 131 and egress node 132 go through a silent period wherein they generate considerably less traffic load than under normal circumstances, as is assumed for instance for QoS flow 1 between the time moments t3 and t4 in Fig. 3 and Fig. 4, new flows between the same ingress-egress pair 131-132 will easily by admitted as the egress node e2 will measure low congestion levels. When the former flow(s) will go back to their normal behavior, the total bandwidth needed for all admitted flows may exceed the available capacity in the network segment. This is for instance illustrated by Fig. 3 which is a diagram showing along the vertical axis the measured accumulated bandwidth usage by egress node 132 between time moment t1 and time moment t6, assuming that the present invention is not activated and the nodes in the PCN domain 101 consequently operate in accordance with the prior art mechanisms. It is noticed that in Fig. 3 (and further also in Fig. 4) the marked area and not the actual height of the curves is a measure for the resource usage by the different flows.

As is indicated by the legend of Fig. 3, a first pattern 301 is used to indicate the bandwidth effectively occupied by the first QoS flow 201 in function of time, a second pattern 302 is used to indicate the bandwidth effectively occupied by the second QoS flow 202 in function of time, and a third pattern 303 is used to indicate the bandwidth effectively occupied by the best effort flows 203 in function of time. In addition, the bold line 304 indicates the bandwidth usage measured for the QoS flows 201 and 202 in egress node 132. In the assumption of the prior art, this measured bandwidth usage 304 at any point in time corresponds to the bandwidth effectively occupied by these two flows 201 and 202, i.e. the sum of the bandwidth 301 occupied by flow 201 and the bandwidth 302 occupied by flow 202. Fig. 3 further shows the assumed bandwidth reserved for the QoS flows 201 and 202 through the bold, dotted line 305. This assumed reserved bandwidth corresponds to the aggregate statistical average bandwidth of the active QoS flows, i.e. the statistical average bandwidth 307 occupied by flow 201 between time moments t1 and t2, the sum of the statistical average bandwidth 307 of flow 201 and the statistical average bandwidth 308 of flow 202 between time moments t2 and t5, and the statistical average bandwidth of flow 202 between t5 and t6. In between time moments t3 and t4, the first QoS flow 201 goes through a silent period. As a result, other QoS flows can be admitted between time t3 and t4. When the first QoS flow 201 at time t4 returns to its normal behavior, the total bandwidth needed for all admitted flows may exceed the available capacity in the network segment between ingress 131 and egress 132 as a result of which the assumed bandwidth reserved for the QoS flows 201 and 202 may no longer be guaranteed.

Fig. 4 illustrates the same scenario in PCN domain 101, but now with the mechanism according to the present invention active. As is indicated by the legend, a first pattern 401 is used to indicate the bandwidth effectively occupied by the first QoS flow 201 in function of time. This corresponds to the bandwidth 301 in Fig. 3. A second pattern 402 is used in Fig. 4 to indicate the bandwidth effectively occupied by the second QoS flow 202 in function of time. This corresponds to the bandwidth 302 in Fig. 3. A third pattern 403 is used to indicate the bandwidth effectively occupied by traffic marked as best effort 203. This can be different from bandwidth 303 in Fig. 3 because it depends on the mechanism used to increase the measured load.

According to the current invention, the ingress node 131 detects that certain QoS flows like 201 and 202 generate lower than normal traffic, the normal traffic being the reserved bandwidth 407 for QoS flow 201 and the reserved bandwidth 408 for QoS flow 202. The ingress node 131 therefore applies a mechanism to increase the measured load of these QoS flows 201 and 202, such that the interior nodes in PCN domain 101 can adequately mark congestion levels on the links and the egress node 132 has a more correct view on the congestion status of the network.

In Fig. 4, it is assumed that ingress node 131 upgrades a selection of best effort traffic to be marked with the respective QoS markings (TOS bit or QoS class) of QoS flows 201 and 202 to fill the missing bandwidth. The bandwidth usage 404 in Fig. 4 in other words is virtual traffic that is generated by marking existing or extra packets to compensate for the fact that the bandwidth usage 401 of QoS flow 201 stays below the reserved bandwidth 407, and to compensate for the fact that the bandwidth usage 402 of QoS flow 202 stays below the reserved bandwidth 408. Thanks to the invention, the total bandwidth or resource of the link is optimally used while reservation of bandwidth for QoS flows is guaranteed.

It is noticed that the ingress node can operate on individual flows such that when a specific flow is measured to be too low in resource usage, intervention will be required. Alternatively, the invention can be applied on ingress-egress aggregate level, i.e. the ingress node measures the traffic load per egress, and in case it drops considerably, intervenes for this ingress-egress pair with the mechanism according to the invention.

Depending on the implementation of the mechanism to generate extra measurable bandwidth usage, the role of the ingress, interior and egress nodes will be different. When the ingress node upgrades lower quality traffic destined to the same egress node, the interior nodes will deploy standard PCN behavior while egress nodes should degrade the upgraded traffic or data packets again to their original, lower priority. When the ingress node inserts dummy traffic with the QoS marking of the target flow, the interior nodes will deploy standard PCN behavior while egress nodes should detect and remove the dummy traffic. When the ingress node marks the packets with a resource usage weight or generates extra packets with indication of extra load, the interior nodes should take the marked or indicated load into account to determine if the link is reaching a near-congestion level and perform the correct congestion marking. Egress nodes in this case must remove the marking or delete the extra inserted packets. In case a node externally to the PCN network will handle the extra load generation, e.g. clients, policy enforcement functions, etc., then only in case that the weight indication mechanism is used, the PCN network should be impacted to take into account the indication of extra load.

It is further noticed that although an edge-to-edge implementation has been described in the above example of a PCN architecture, also end-to-end and link-to-link implementations can be considered. The invention obviously is not limited to PCN architectures. Whereas the terms "interior node", "ingress node", "egress node" refer specifically to PCN architectures, it will be understood that any resource measuring node in a non-PCN architecture may be adapted to operate according to the invention, even if such measuring node does not necessarily measure resource usage by individual flows but rather measures aggregate resource usage. Further, it is noticed that measured resource usage values may be sent to other nodes or elements in the network, such as an admission controller or congestion controller.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A data packet processing device comprising:
- means for detecting resource usage reduction by a first data packet flow (141, 201, 401) along a path from a first source (251) to a first destination (261), said first data packet flow (141, 201, 401) having a first Quality of Service marking (QoS1);and
- means for generating measurable resource usage along at least part of said path of said first data packet flow (141, 201, 401), **characterized in that** said means for generating measurable resource usage comprise means for upgrading a second Quality of Service marking of data packets in one or more further data packet flows (203, 403) different from said first data packet flow (141, 201, 401) to said first Quality of Service marking (QoS1).

2. A data packet processing device according to claim 1, wherein said means for generating measurable resource usage comprise:
- means for inserting or increasing a resource usage value in one or more data packets of said first data packet flow (141, 201, 401), said resource usage value being inspected and used by hops along said path for measurement of resource usage by said first data packet flow (141, 201, 401).

3. A data packet processing device according to claim 1, wherein said means for generating measurable resource usage comprise:
- means for generating and inserting in said first data packet flow (141, 201, 401) empty data packets marked with said first Quality of Service marking (QoS1) and with a resource usage value, said resource usage value being inspected and used by hops along said path for measurement of resource usage by said first data packet flow (141, 201, 401).

4. A data packet processing device according to claim 1, wherein said means for generating measurable resource usage comprise:
- means for generating and inserting in said first data packet flow (141, 201, 401) dummy data packets marked with said first Quality of Service marking (QoS1).

5. A data packet processing device according to claim 1, wherein said means for generating measurable resource usage comprise:
- means for tagging data packets of one or more further data packet flows (202, 203; 402, 403) having a further destination (262, 263) different from said first destination (261) with a transferable Quality of Service token corresponding to said first Quality of Service marking (QoS1), said Quality of Service token being transferable in a hop along said path where said data packets no longer follow said path of said first data packet flow (141, 201, 401).

6. A data packet processing device according to claim 1, wherein said means for generating measurable resource usage comprise:
- means for encapsulating data packets of one or more further data packet flows (202, 203; 402, 403) having a further destination different from said first destination (261) in a tunnel towards said first destination (261), said data packets being extractable from said tunnel in a hop along said path where said data packets no longer follow said path of said first data packet flow (141, 201, 401).

7. A data packet processing device according to claim 1, wherein said data packet processing device further comprises:
- means for configuring an amount of said measurable resource usage generated.

8. A data packet processing device according to claim 1, said data packet processing device being integrated in a measurement based admission controller.

9. A data packet processing device according to claim 1, said data packet processing device being integrated in a congestion controller.

10. A data packet processing method comprising:
- detecting resource usage reduction by a first data packet flow (141, 201, 401) along a path from a first source (251) to a first destination (261), said first data packet flow (141, 201, 401) having a first Quality of Service marking (QoS1); and
- generating measurable resource usage along at least part of said path of said first data packet flow (141, 201, 401) **characterized in that** said generating comprises upgrading a second Quality of Service marking of data packets in one or more data packet flows (203, 403) different from said first data packet flow (141, 201, 401) is upgraded to said first Quality of Service marking (QoS1).

## Patentansprüche

1. Datenpaketverarbeitungsvorrichtung, umfassend:
- Mittel zum Erkennen einer Reduzierung der Ressourcennutzung durch einen ersten Datenpaketfluss (141, 201, 401) längs eines Pfads von einer ersten Quelladresse (251) zu einer ersten Zieladresse (261), wobei der besagte erste Datenpaketfluss (141, 201, 401) ein erstes Dienstgütezeichen (QoS1) aufweist; und
- Mittel zum Erzeugen einer messbaren Ressourcennutzung längs mindestens eines Teils des besagten Pfads des besagten ersten Datenpaketflusses (141, 201, 401), **dadurch gekennzeichnet, dass** die besagten Mittel zum Erzeugen einer messbaren Ressourcennutzung Mittel zum Aktualisieren eines zweiten Dienstgütezeichens von Datenpaketen in einem oder mehreren weiteren Datenpaketflüssen (203, 403), die sich von dem besagten ersten Datenpaketfluss (141, 201, 401) unterscheiden, auf das besagte erste Dienstgütezeichen (QoS1), umfassen.

2. Datenpaketverarbeitungsvorrichtung nach Anspruch 1, wobei die besagten Mittel zum Erzeugen einer messbaren Ressourcennutzung umfassen:
- Mittel zum Einfügen oder Erhöhen eines Ressourcennutzungswerts in ein(em) oder mehrere(n) Datenpakete(n) des besagten erste Datenpaketfluss (141, 201, 401), wobei der besagte Ressourcennutzungswert geprüft und in Hops längs des besagten Pfads zum Messen der Ressourcennutzung durch den besagten ersten Datenpaketfluss (141, 201, 401) verwendet wird.

3. Datenpaketverarbeitungsvorrichtung nach Anspruch 1, wobei die besagten Mittel zum Erzeugen einer messbaren Ressourcennutzung umfassen:
- Mittel zum Erzeugen und Einfügen von leeren Datenpaketen, die mit dem besagten ersten Dienstgütezeichen (QoS1) und mit einem Ressourcennutzungswert markiert sind, in den besagten ersten Datenpaketfluss (141, 201, 401), wobei der besagte Ressourcennutzungswert geprüft und in Hops längs des besagten Pfads zum Messen der Ressourcennutzung durch den besagten ersten Datenpaketfluss (141, 201, 401) verwendet wird.

4. Datenpaketverarbeitungsvorrichtung nach Anspruch 1, wobei die besagten Mittel zum Erzeugen einer messbaren Ressourcennutzung umfassen:
- Mittel zum Erzeugen und Einfügen von Ersatz-Datenpaketen, die mit dem besagten ersten Dienstgütezeichen (QoS1) markiert sind, in den besagten ersten Datenpaketfluss (141, 201, 401).

5. Datenpaketverarbeitungsvorrichtung nach Anspruch 1, wobei die besagten Mittel zum Erzeugen einer messbaren Ressourcennutzung umfassen:
- Mittel zum Kennzeichnen von Datenpaketen eines oder mehrerer weiterer Datenpaketflüsse (202, 203; 402, 403) mit einer weiteren Zieladresse (262, 263), welche sich von der besagten ersten Zieladresse (261) unterscheidet, mit einem übertragbaren Dienstgüte-Token, welches dem besagten ersten Dienstgütezeichen (QoS1) entspricht, wobei das besagte Dienstgüte-Token in einem Hop längs des besagten Pfads übertragbar ist, wobei die besagten Datenpakete nicht länger dem besagten Pfad des besagten ersten Datenpaketflusses (141, 201, 401) folgen.

6. Datenpaketverarbeitungsvorrichtung nach Anspruch 1, wobei die besagten Mittel zum Erzeugen einer messbaren Ressourcennutzung umfassen:
- Mittel zum Verkapseln von Datenpaketen eines oder mehrerer weiterer Datenpaketflüsse (202, 203; 402, 403) mit einer weiteren Zieladresse, welche sich von der besagten ersten Zieladresse (261) unterscheidet, in einem Tunnel zu der besagten ersten Zieladresse (261), wobei die besagten Datenpakete in einem Hop längs des besagten Pfads aus dem Tunnel extrahiert werden können, wobei die besagten Datenpakete nicht länger dem besagten Pfad des besagten ersten Datenpaketflusses (141, 201, 401) folgen.

7. Datenpaketverarbeitungsvorrichtung nach Anspruch 1, wobei die besagte Datenpaketverarbeitungsvorrichtung weiterhin umfasst:
- Mittel zum Konfigurieren einer Menge der besagten erzeugten messbaren Ressourcennutzung.

8. Datenpaketverarbeitungsvorrichtung nach Anspruch 1, wobei die besagte Datenpaketverarbeitungsvorrichtung in einem messungsbasierten Zulassungs-Controller integriert ist.

9. Datenpaketverarbeitungsvorrichtung nach Anspruch 1, wobei die besagte Datenpaketverarbeitungsvorrichtung in einem Überlastungs-Controller integriert ist.

10. Datenpaketverarbeitungsverfahren, umfassend:
- Erkennen einer Reduzierung der Ressourcennutzung durch einen ersten Datenpaketfluss (141, 201, 401) längs eines Pfads von einer ersten Quelladresse (251) zu einer ersten Zieladresse (261), wobei der besagte erste Datenpaketfluss (141, 201, 401) eine Markierung mit einem ersten Dienstgütezeichen (QoS1) aufweist; und
- Erzeugen einer messbaren Ressourcennutzung längs mindestens eines Teils des besagten Pfads des besagten ersten Datenpaketflusses (141, 201, 401), **dadurch gekennzeichnet, dass** das Erzeugen das Aktualisieren eines zweiten Dienstgütezeichens von Datenpaketen in einem oder mehreren Datenpaketflüssen (203, 403), die sich von dem ersten Datenpaketfluss (141, 201, 401) unterscheiden, auf das besagte erste Dienstgütezeichen (QoS1) umfasst.

## Revendications

1. Dispositif de traitement de paquets de données comprenant :
- moyens pour détecter une réduction d'utilisation de ressources au moyen d'un premier flux de paquets de données (141, 201, 401) le long d'un chemin entre une première source (251) et une première destination (261), ledit premier flux de paquets de données (141, 201, 401) présentant un premier marquage de qualité de service (QoS1) ; et
- moyens pour générer une utilisation de ressources mesurable le long d'au moins une partie dudit chemin dudit premier flux de paquets de données (141, 201, 401), **caractérisé en ce que** lesdits moyens pour générer une utilisation de ressources mesurable comprennent des moyens pour mettre un deuxième marquage de qualité de service de paquets de données dans un ou plusieurs autres flux de paquets de données (203, 403) différents dudit premier flux de paquets de données (141, 201, 401) au niveau dudit premier marquage de qualité de service (QoS1).

2. Dispositif de traitement de paquets de données selon la revendication 1, dans lequel lesdits moyens pour générer une utilisation de ressources mesurable comprennent :
- moyens pour insérer ou augmenter une valeur d'utilisation de ressources dans un ou plusieurs paquets de données dudit premier flux de paquets de données (141, 201, 401), ladite valeur d'utilisation de ressources étant inspectée et utilisée par des sauts le long dudit chemin pour mesurer l'utilisation de ressources au moyen dudit premier flux de paquets de données (141, 201, 401).

3. Dispositif de traitement de paquets de données selon la revendication 1, dans lequel lesdits moyens pour générer une utilisation de ressources mesurable comprennent :
- moyens pour générer et insérer dans ledit premier flux de paquets de données (141, 201, 401) des paquets de données vides marqués avec ledit premier marquage de qualité de service (QoS1) et avec une valeur d'utilisation de ressources, ladite valeur d'utilisation de ressources étant inspectée et utilisée par des sauts le long dudit chemin pour mesurer l'utilisation de ressources au moyen dudit premier flux de paquets de données(141,201,401).

4. Dispositif de traitement de paquets de données selon la revendication 1, dans lequel lesdits moyens pour générer une utilisation de ressources mesurable comprennent :
- moyens pour générer et insérer dans ledit premier flux de paquets de données (141, 201, 401) des paquets de données fictifs marqués avec ledit premier marquage de qualité de service (QoS1).

5. Dispositif de traitement de paquets de données selon la revendication 1, dans lequel lesdits moyens pour générer une utilisation de ressources mesurable comprennent :
- moyens pour étiqueter des paquets de données d'un ou de plusieurs autres flux de paquets de données (202, 203 ; 402, 403) ayant une autre destination (262, 263) différente de ladite première destination (261) avec un jeton de qualité de service transférable correspondant audit premier marquage de qualité de service (QoS1), ledit jeton de qualité de service étant transférable dans un saut le long dudit chemin où lesdits paquets de données ne suivent plus ledit chemin dudit premier flux de paquets de données(141,201,401).

6. Dispositif de traitement de paquets de données selon la revendication 1, dans lequel lesdits moyens pour générer une utilisation de ressources mesurable comprennent :
- moyens pour encapsuler des paquets de données d'un ou de plusieurs autres flux de paquets de données (202, 203 ; 402, 403) ayant une autre destination différente de ladite première destination (261) dans un tunnel en direction de ladite première destination (261), lesdits paquets de données pouvant être extraits dudit tunnel dans un saut le long dudit chemin où lesdits paquets de données ne suivent plus ledit chemin dudit premier flux de paquets de données (141, 201, 401).

7. Dispositif de traitement de paquets de données selon la revendication 1, dans lequel ledit dispositif de traitement de paquets de données comprend en outre :
- moyens pour configurer une quantité de ladite utilisation de ressources mesurable générée.

8. Dispositif de traitement de paquets de données selon la revendication 1, ledit dispositif de traitement de paquets de données étant intégré dans un contrôleur d'admission basé sur la mesure.

9. Dispositif de traitement de paquets de données selon la revendication 1, ledit dispositif de traitement de paquets de données étant intégré dans un dispositif de contrôle d'encombrement.

10. Procédé de traitement de paquets de données comprenant les étapes suivantes :
- détecter une réduction d'utilisation de ressources au moyen d'un premier flux de paquets de données (141, 201, 401) le long d'un chemin entre une première source (251) et une première destination (261), ledit premier flux de paquets de données (141, 201, 401) présentant un premier marquage de qualité de service (QoS1) ; et
- générer une utilisation de ressources mesurable le long d'au moins une partie dudit chemin dudit premier flux de paquets de données (141, 201, 401), **caractérisé en ce que** ladite génération consiste à mettre un deuxième marquage de qualité de service de paquets de données dans un ou plusieurs flux de paquets de données (203, 403) différents dudit premier flux de paquets de données (141, 201, 401) au niveau dudit premier marquage de qualité de service (QoS1).
